(19) Europäisches Patentamt
European Patent Office
Office européen des brevets

(11) **EP 3 766 165 B1**

(12) **EUROPEAN PATENT SPECIFICATION**

(45) Date of publication and mention
of the grant of the patent:
**27.04.2022 Bulletin 2022/17**

(51) International Patent Classification (IPC):
**H02K 33/02** (2006.01)   **H02K 7/18** (2006.01)
**H02K 35/02** (2006.01)   **H02N 2/18** (2006.01)

(21) Application number: **19709760.3**

(22) Date of filing: **15.03.2019**

(52) Cooperative Patent Classification (CPC):
**H02K 7/1876; H02K 35/02; H02N 2/188**

(86) International application number:
**PCT/EP2019/056601**

(87) International publication number:
**WO 2019/175413 (19.09.2019 Gazette 2019/38)**

(54) **VIBRATION ENERGY HARVESTER, OPTIMIZED BY ELECTRONICALLY EMULATED MECHANICAL TUNING TECHNIQUE**

DURCH ELEKTRONISCH EMULIERTE MECHANISCHE ABSTIMMUNGSTECHNIK OPTIMIERTE VIBRATIONSENERGIEGEWINNUNGSVORRICHTUNG

DISPOSITIF DE COLLECTE D'ÉNERGIE DE VIBRATION OPTIMISÉ PAR UNE TECHNIQUE D'ACCORD MÉCANIQUE ÉMULÉE ÉLECTRONIQUEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2018 IT 201800003632**

(43) Date of publication of application:
**20.01.2021 Bulletin 2021/03**

(73) Proprietor: **Università degli Studi della Campania "Luigi Vanvitelli"**
**81100 Caserta (CE) (IT)**

(72) Inventors:
• **VITELLI, Massimo**
**81100 Caserta (CE) (IT)**
• **BALATO, Marco**
**81100 Caserta (CE) (IT)**
• **COSTANZO, Luigi**
**81100 Caserta (CE) (IT)**
• **LO SCHIAVO, Alessandro**
**81100 Caserta (CE) (IT)**

(74) Representative: **Capasso, Olga et al**
**De Simone & Partners S.r.l.**
**Via Vincenzo Bellini, 20**
**00198 Roma (IT)**

(56) References cited:
**WO-A1-2017/172012     DE-A1-102009 021 556**
**US-A1- 2010 194 117**

**Description**

**TECHNICAL FIELD**

The present invention relates to a resonant vibration energy harvester capable of optimizing the conversion of vibrational kinetic energy generated by an external source into electrical energy. Furthermore, the present invention relates to a system comprising said resonant vibration energy harvester. The present invention further relates to a method for optimizing the operation of said resonant harvester.

**STATE OF THE ART**

Resonant vibration energy harvesters (REVEHs) are devices capable of exploiting energy deriving from vibrations of the external environment that would otherwise remain unused. Energy can be extracted through transduction mechanisms that belong mainly to three broad categories: piezoelectric, electromagnetic and electrostatic transduction.

In recent years, REVEHs have been proposed for a variety of applications, such as industrial applications, medical implants, sensors inside buildings or other constructions (bridges), wireless sensor networks, etc. The use of energy harvesters eliminates all the disadvantages of using batteries to power sensors or other devices (expensive maintenance, insufficient or unpredictable operational life cycle, difficulty in replacing batteries, disposal problems, etc.). On the other hand, however, the performance of these energy harvesters is closely linked to the vibration frequency at play. In other words, REVEHs are able to operate efficiently only when the vibration frequency of the external source corresponds to the mechanical resonance frequency of the harvester itself. This means that if the resonant vibration harvester was initially configured to oscillate at a given resonance frequency, this should be used for those applications characterized by a dominant frequency coinciding with the resonance frequency. In practice, however, this is difficult to achieve because the environmental vibrations show a variable frequency pattern, wherein the energy content is distributed over a very wide frequency spectrum.

Various solutions have been proposed in the literature to increase the operating frequency range for resonant vibration energy harvesters. For example, arrays of resonant harvesters at different frequencies, non-linear harvesters and resonance frequency adjustment methods or tuning methods have been proposed.

Among the various tuning methods, the electric tuning method (ETT) is known which tends to adapt the electric load of the harvester by acting on the electronic parameters of the system and the mechanical tuning method (MTT) which instead tends to adjust the resonance frequency acting on the mechanical parameters of the system, such as the value of the oscillating mass and / or the stiffness of the spring. For example, US 2010/194117 A1 discloses a harvester with mechanical adjustment.

Mechanical tuning methods can in turn be divided into passive methods, which do not require external energy and therefore are uncontrollable and not much accurate, and active methods that are more accurate but require external energy instead. In the latter case, closed-loop control schemes are used so as to guarantee automatic and roughly accurate frequency tracking. However, although energy harvesters using active mechanical tuning systems are able to achieve good results in terms of frequency tracking, in most cases the energy consumed to achieve this goal exceeds that produced by the same harvester thus making a system of this kind not advantageous in terms of total yield as a negative final energy balance is determined.

Therefore, it is the object of the present invention to provide a resonant vibration energy harvester wherein the energy conversion is optimized by means of a new active tuning method, obtaining however a positive final energy balance.

**DISCLOSURE OF INVENTION**

These objects are achieved by an energy harvester, by a system and by a method according to the claims at the end of the present description.

The harvester according to the present invention is a resonant device used to optimize the conversion of vibrational kinetic energy generated by an external source into electrical energy. The harvester comprises a supporting housing capable of vibrating in response to the external source and an electromagnetic generator coupled to the housing and having a given resonance frequency. The harvester comprises elastic means placed within the housing and fixed to a wall of said housing, at least one magnetic element having a mass and coupled to the housing by said elastic means, wherein the elastic means create a relative motion among the magnetic element and the housing itself, wherein the magnetic element is a permanent magnet and the resonance frequency of the electromagnetic generator is the mechanical resonance frequency of the magnetic element with respect to the housing, and a first conductive winding, magnetically coupled to the magnetic element and fixed to the housing such that the vibrational kinetic energy generated by the external source determines a relative displacement between the magnetic element and the first winding causing a potential difference to be generated at the ends of the first winding.

The harvester is characterized in that it further comprises a second winding, or coil, fixed to a non-vibrating support and being stationary with respect to said support and separated from the housing, wherein the distance between the first winding and the second winding is such as to make a mutual magnetic coupling between said first and second winding negligible, as well as control means connected to the ends of the second winding to inject an electric current within the second winding and regulate the intensity of said electric current so as to adapt the resonance frequency of the electromagnetic generator to the vibration frequency associated to the vibrational kinetic energy generated by the external source.

In this way, a Mechanical Tuning Technique (MTT) is determined for REVEHs based on the emulation of the desired mass-spring-damper system. Such a technique can be referred to as SMDE (Spring-Mass-Damper Emulation-based) MTT. Furthermore, the SMDE technique is an active MTT that can achieve a positive net energy balance.

The presence of a fixed external coil, added to a standard REVEH, determines a system that can be referred to as SMDE REVEH. A suitable current is circulated in such an outer coil so as to emulate, at the same time, the effects of the desired stiffness, of the desired mass and of the desired damping coefficient. Therefore, both the resonance frequency of the SMDE REVEH and its net power balance can (and must) be modified by suitably controlling the current flowing in the outer coil described above. In this way, the magnetic force that the current passing through the external coil exerts on the movable magnet of the SMDE REVEH comes to be equal to the mechanical force that would be exerted by a "virtual" spring (with the desired stiffness) on a "virtual" magnet (with the desired mass) that vibrates in a "virtual" fluid (with the desired viscous friction coefficient).

It should be noted that the two coils (or windings) do not necessarily have to be identical in shape and size. According to alternative embodiments, it is possible to use a second coil different from the first one, however ensuring that it is fixed and that it is at a distance from the first coil such that the mutual coupling between them can be considered negligible. In the same way, it is possible to consider any configuration between the magnetic element and the two coils. Specifically, the configuration between the magnetic element and the two windings must simply comply with the condition that the second winding is fixed and that it is at such a distance from the first winding that the mutual coupling between the two windings can be considered negligible.

The proposed technique is applicable regardless of the features of the magnet and of the first winding (or internal coil). As to the size and features of the second winding (external coil), in the case of two identical windings, these are dictated by the first winding (internal coil) and then defined at the time of the identification of the harvester to be optimized. According to an embodiment of the harvester, the elastic means may comprise a couple of coil springs each having one end fixed to the housing and the other end fixed to the magnetic element. In this way, the magnetic element is movable and free to vibrate inside the housing. The elastic means can be any type of means able to guarantee the relative movement between the magnetic element and the housing in response to the vibration of the generator. Depending on the particular configuration of the housing and / or the magnet, the elastic means may vary in number.

According to a further embodiment, in order to extract the electric current produced as a result of the vibration of the external source, the harvester can further comprise an extraction electrical circuit and a storage circuit coupled to the ends of the first winding.

In one embodiment of the harvester according to the present description, the first and second windings can be positioned at opposite sides with respect to the magnetic element. In this way, the electromagnetic coupling between the two coils or windings can be reduced.

In particular, the control means may comprise a control electrical circuit for the generation of electrical current and the consequent emulation of a mass-spring-damper system.

Furthermore, the control electrical circuit is configured to determine an emulated resonance frequency with a value that is higher than the vibration frequency (of the external source) and lower than the mechanical resonance frequency of the electromagnetic generator.

The system according to the present invention comprises a resonant vibration energy harvester according to one of the preceding claims and an electronic device coupled to said harvester.

The method for optimizing the conversion of vibrational kinetic energy generated by an external source into electrical energy according to the present invention comprises the step of providing a supporting housing capable of vibrating in response to the external source and of coupling to the housing an electromagnetic generator having a resonance frequency, wherein the harvester comprises elastic means placed within the housing and fixed to a wall of said housing, at least one magnetic element having a mass and coupled to the housing by said elastic means, wherein the elastic means create a relative motion among the magnetic element and the housing itself and wherein the magnetic element is a permanent magnet and the resonance frequency of the electromagnetic generator is the mechanical resonance frequency of the magnetic element with respect to the housing and a first conductive winding, magnetically coupled to the magnetic element and fixed to the housing such that the vibrational kinetic energy generated by the external source determines a relative displacement between the magnetic element and the first winding causing a potential difference to be generated at the ends of the first winding. The method is characterized by providing a second winding, fixed to a non-vibrating support and being stationary with respect to said support and separated from the housing, wherein the distance between the first winding and the second winding is such as to make a mutual magnetic coupling between said first and second winding negligible, as well as connecting control means to the ends of the second winding to inject an electric current within the second winding and regulate the intensity of said electric current so as to adapt the resonance frequency of the electromagnetic generator to the frequency or frequencies associated to the vibrational kinetic energy generated by the external source.

This method is used to optimize the conversion of vibrational energy into electrical energy on the basis of an energy harvester as previously described. Therefore, all the advantages and features of the harvester also apply to the associated optimization method.

According to an embodiment, the step of connecting the control means to the ends of the second winding determines the emulation of a mass-spring-damper system.

These and other aspects of the present invention will become more apparent by reading the following description of some preferred embodiments described below.

Fig. 1 shows a schematic representation of a conventional REVEH;

Figs. 2a-b show a single degree of freedom model of a conventional REVEH (a), a corresponding equivalent circuit (b) and the qualitative pattern of power as a function of frequency (c) ;

Fig. 3 is a schematic representation of an energy harvester according to an embodiment of the present invention;

Figs. 4a-b show the forces acting on the movable magnet of the harvester according to an embodiment of the present invention (a) and the corresponding equivalent electrical circuit (b);

Fig. 5 shows the architecture of an SMDE MTT REVEH system according to an embodiment of the present invention;

Fig. 6 shows in a graph the value of $\Delta P\%$ as a function of $m^*/m$ and $ks^*/ks$; $c^*/c = -1.6$ and $f_{vib}/f_{opt} = 0.8$;

Figs. 7a-d show in a graph the value of $\Delta P_{MAX}\%$ as a function of $c^*/c$ at $f_{vib}/f_{opt} = 0.8$ (a), the value of $m_{BEST}^*/m$ as a function of $c^*/c$ at $f_{vib}/f_{opt} = 0.8$ (b), the value of $ks_{BEST}^*/ks$ as a function of $c^*/c$ at $f_{vib}/f_{opt} = 0.8$ (c) and the value of $f^*_{opt\_BEST}/f_{vib}$ as a function of $c^*/c$;

Fig. 8 shows the pattern of $\Delta P\%$ as a function of $m^*/m$ and $ks^*/ks$; $c^*/c = c_{BEST}^*/c = -0.4$ and $f_{vib}/f_{opt} = 0.8$;

Figs. 9a-c show the pattern, as a function of frequency, of the main powers taken into consideration, $c^*/c = c_{BEST}^*/c = -0.4$ and $f_{vib}/f_{opt} = 0.8$ (a), the load voltages $V_{LOAD\_SMDE}$ and V, the output voltage of the electronic power converter $V_{ext}$, $c^*/c = c_{BEST}^*/c = -0.4$ and $f_{vib}/f_{opt} = 0.8$ (b) and the load currents $I_{SMDE}$ and I, current in the external coil $I_{ext}$, $c^*/c = -0.4$ and $f_{vib}/f_{opt} = 0.8$ (c);

Fig. 10 shows the pattern of $\Delta P\%$ as a function of $m^*/m$ and $ks^*/ks$; $c^*/c = c_{BEST}^*/c = -0.2$ and $f_{vib}/f_{opt} = 0.7$;

Figs. 11a-c show the pattern as a function of frequency of the main powers taken into consideration, $c^*/c = c_{BEST}^*/c = -0.2$ and $f_{vib}/f_{opt} = 0.7$ (a), the load voltages $V_{LOAD\_SMDE}$ and V, the output voltage of the electronic power converter $V_{ext}$, $c^*/c = c_{BEST}^*/c = -0.2$ and $f_{vib}/f_{opt} = 0.7$ (b) and the load currents $I_{SMDE}$ and I, current in the external coil $I_{ext}$, $c^*/c = c_{BEST}^*/c = -0.2$ and $f_{vib}/f_{opt} = 0.7$ (c) .

As highlighted earlier, the SMDE technique is an active MTT. This means that, obviously, it will only be useful from the practical point of view in those operating conditions wherein the power required for the implementation of the technique itself ($P_{SMDE}$) is less than the power that SMDE REVEH provides at its optimal load ($P_{LOAD\_SMDE}$). It should be noted that the requirement that the extracted net power $P_{LOAD\_SMDE} - P_{SMDE}$ is positive is not sufficient. In particular, due to the fact that a second coil is added to the starting REVEH, the performance of the resulting harvester (SMDE REVEH) cannot be compared only with those of the ORIGINAL REVEH, i.e. the conventional harvester without an external coil. In the following, the REVEH obtained by connecting in series the original coil with the external coil will be called SERIES REVEH and the power it provides to its optimal load will be referred to as $P_{SERIES}$. The REVEH obtained by replacing the original coil with the external coil will be called EXTERNAL REVEH and the power it provides to its optimal load will be referred to as $P_{EXTERNAL}$. For a correct performance analysis, the reference power $P_{BENCHMARK}$ must coincide with the maximum between the powers $P_{SERIES}$, $P_{EXTERNAL}$ and $P_{ORIGINAL}$ (power that the ORIGINAL REVEH supplies to its optimal load). This means that the SMDE technique will be useful from a practical point of view only if the extracted net power ($P_{LOAD\_SMDE} - P_{SMDE}$) is greater than the reference power $P_{BENCHMARK}$. The present invention shows how to maximize the quantity $P_{LOAD\_SMDE} - P_{SMDE} - P_{BENCHMARK}$ at a desired vibration frequency $f_{vib}$.

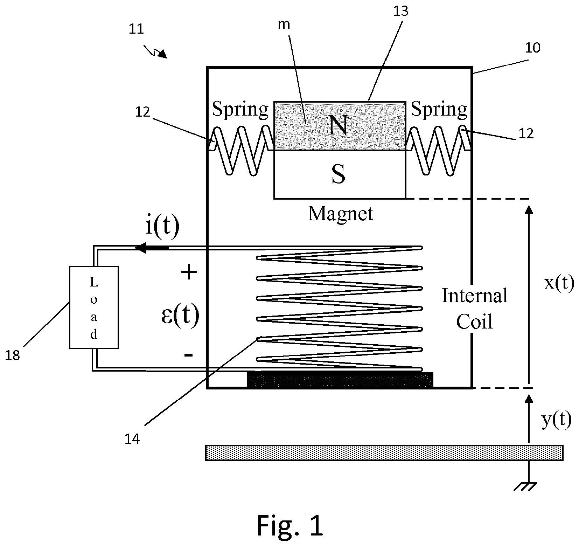

Figure 1 schematically shows the structure of a conventional REVEH energy harvester 11. A permanent magnet 13 having a mass m is connected to a system of springs 12 (the springs 12 are positioned on the sides of the magnet 13) and moves, in the presence of the vibrations, into the housing 10 of the REVEH. A coil 14 (or internal coil in Fig. 1) is fixed to the housing 10 and a load 18 is present on its ends. Following the vibrations, a relative displacement x(t) is created between the magnet 13 and the coil 14. This relative displacement x(t) allows the conversion of mechanical energy into electrical energy. y(t) represents the displacement of the base of the housing 10 with respect to a fixed reference.

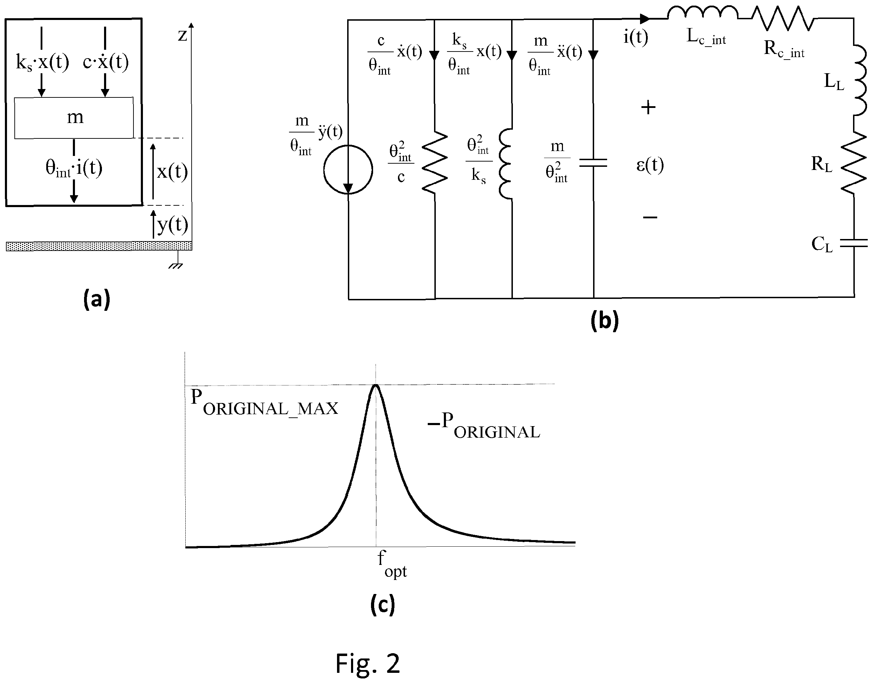

The device in figure 1 can be represented by a Single Degree of Freedom (SDOF) model shown in Figure 2(a) where the forces acting on the magnet are represented by means of appropriate arrows. In particular, $c \cdot \dot{x}(t)$ represents the viscous friction force (wherein c is the viscous friction coefficient), $k_s \cdot x(t)$ represents the elastic force exerted by the spring system (wherein $k_s$ is the equivalent elastic constant of the spring system in Fig. 1), $\theta_{int} \cdot i(t)$ represents the electromagnetic force due to the coil (wherein $\theta_{int}$ is the electromechanical coupling coefficient of the coil inside the harvester).

The application of the second law of Newton, along the axis z, to the SDOF system of Fig. 2 leads to the writing of the following equation which regulates the behaviour in time of the relative displacement x(t):

$$\frac{m}{\theta_{int}}\ddot{x}(t)+\frac{c}{\theta_{int}}\dot{x}(t)+\frac{k_s}{\theta_{int}}x(t)+i(t)=-\frac{m}{\theta_{int}}\ddot{y}(t)$$

**Equation (1)**

wherein $m$ represents the value of the oscillating mass (mass of the magnet 13) and $\ddot{y}(t)$ represents the acceleration to which the housing 10 of the REVEH is subjected. Since each addend of equation (1) is an electrical current, it is possible to identify the equivalent electrical circuit of the REVEH as shown in figure 2(b).

In particular, in figure 2(b), $L_{c\_int}$ and $R_{c\_int}$ respectively represent the inductance and resistance of the internal coil 14, $i(t)$ represents the current flowing into the load 18 and $\varepsilon(t)$ is the electromotive force (emf) induced in the inner coil 14. The expression of this emf is as follows:

$$\varepsilon(t)=\dot{x}(t)\theta_{int}$$

**Equation (2)**

If we consider a sinusoidal type acceleration of the housing 10 $\ddot{y}(t)$ with a pulsation $\omega$ (i.e. $\ddot{y}(t) = a \cdot cos(\omega t)$), equations (1) and (2) can be rewritten in the domain of frequency and become equations (3) and (4), respectively:

$$\frac{m}{\theta_{int}}\left[-\omega^2 X(\omega)\right]+\frac{c}{\theta_{int}}\left[j\omega X(\omega)\right]+\frac{k_s}{\theta_{int}}X(\omega)+I(\omega)=-\frac{m}{\theta_{int}}a$$

**Equation (3)**

$$E(\omega) = j\omega X(\omega) \cdot \theta_{int}$$

**Equation (4)**

wherein $X(\omega)$, $I(\omega)$ and $E(\omega)$ respectively represent the Fourier transform of $x(t)$, $i(t)$ and $\varepsilon(t)$ and $j$ is the imaginary unit. By analysing the circuit of figure 2 (b) it is possible to obtain:

$$E(\omega)=I(\omega)\cdot\left[R_{c\_int}+R_L+j\cdot\left(X_{c\_int}(\omega)+X_L(\omega)\right)\right]$$

**Equation (5)**

where: $X_{c\_int}(\omega)=\omega \cdot L_{c\_int}$

$$X_L(\omega)=\omega \cdot L_L - \frac{1}{\omega \cdot C_L}$$

**Equation (6)**

From equations (4) and (5) it is possible to write the following expression of the relative displacement $X(\omega)$:

$$X(\omega) = I(\omega) \cdot \frac{\left[ R_{c\_int} + R_L + j \cdot \left( X_{c\_int}(\omega) + X_L(\omega) \right) \right]}{j\omega\theta_{int}}$$

**Equation (7)**

Therefore, inserting the equation (7) in (3), we obtain:

$$I(\omega) = \frac{-m \cdot a \cdot j\omega\theta_{int}}{\left[ R_{c\_int} + R_L + j \cdot \left( X_{c\_int}(\omega) + X_L(\omega) \right) \right] \cdot \left( k_s - m \cdot \omega^2 + j\omega c \right) + j\omega\theta_{int}^2}$$

**Equation (8)**

Finally, the power transferred to the load is equal to:

$$P_{load}\left( R_L, X_L, \omega \right) = \frac{1}{2} R_L \left| I(\omega) \right|^2$$

**Equation (9)**

The optimal load, i.e. the load that maximizes $P_{load}(R_L, X_L, \omega)$ at a certain frequency is:

$$X_{L\_opt}(\omega) = \frac{\theta_{int}^2 \left( m \cdot \omega^2 - k_s \right) \omega}{\left( k_s - m \cdot \omega^2 \right)^2 + \left( c\omega \right)^2} - X_{c\_int}(\omega)$$

**Equation (10.1)**

$$R_{L\_opt}(\omega) = R_{c\_int} + \frac{\theta_{int}^2 c \cdot \omega^2}{\left( k_s - m \cdot \omega^2 \right)^2 + \left( c\omega \right)^2}$$

**Equation (10.2)**

As a consequence, the expression of the maximum power $P_{ORIGINAL}(\omega)$ supplied by the conventional REVEH to the load is as follows:

$$P_{ORIGINAL}(\omega) = P_{load}\left( R_{L\_opt}(\omega), X_{L\_opt}(\omega), \omega \right) = \frac{1}{8} \frac{a^2 \theta_{int}^2 m^2 \omega^2}{R_{c\_int} \left[ \left( k_s - m\omega^2 \right)^2 + \left( c\omega \right)^2 \right] + c\left( \omega\theta_{int} \right)^2}$$

**Equation (11)**

Figure 2c shows the typical $P_{ORIGINAL}$ pattern as a function of frequency. Due to the resonant nature of the REVEH, maximum power is supplied to the optimal load only at the resonance frequency $f_{opt}$ of the mass-spring-damper system. The values of such resonance frequency ($f_{opt} = \omega_{opt}/(2\pi)$) and of the maximum extractable power $P_{ORIGINAL\_MAX} = P_{ORIGINAL}(\omega_{opt})$ are as follows:

$$\omega_{opt} = 2 \cdot \pi \cdot f_{opt} = \sqrt{\frac{k_s}{m}}$$

**Equation (12)**

$$P_{ORIGINAL\_MAX} = P_{ORIGINAL}\left(\omega_{opt}\right) = \frac{1}{8}\frac{a^2\theta_{int}^2 m^2}{R_{c\_int} \cdot c^2 + c \cdot \theta_{int}^2}$$

**Equation (13)**

In practice, if the vibration frequency $f_{vib}$ varies with time, any ETT technique ideally allows to extract only the power that is given by the curve shown in Fig. 2c at the vibration frequency $f_{vib}$. On the contrary, since the SMDE technique is an MTT, when it is coupled to any ETT technique, it ideally allows (i.e. when $P_{SMDE}$ is null) to extract the power peak $P_{ORIGINAL\_MAX}$ at each frequency. In other words, it allows to extract the power peak of the time-varying curve which is obtained by moving the curve of Fig. 2c, right or left, as desired. In practice, however, due to the presence of a non-zero $P_{SMDE}(\omega)$, the net power extracted $P_{LOAD\_SMDE}(2\pi f_{vib}) - P_{SMDE}(2\pi f_{vib})$ at the frequency $f_{vib}$, is less than $P_{ORIGINAL\_MAX}$. However, this net power is greater than $P_{ORIGINAL}(2\pi f_{vib})$. As shown below, due to the particular trends of $P_{LOAD\_SMDE}(\omega)$, $P_{SMDE}(\omega)$ and $P_{BENCHMARK}(\omega)$, in order to obtain the maximum value of $P_{LOAD\_SMDE}(2\pi f_{vib}) - P_{SMDE}(2\pi f_{vib}) - P_{BENCHMARK}(2\pi f_{vib})$ it is necessary to regulate appropriately the values of the equivalent stiffness, of the equivalent mass and of the equivalent viscous friction coefficient. Through this adjustment, an optimal mechanical resonance frequency $f_{opt}^*$ (greater than $f_{vib}$) of the SMDE REVEH is obtained. In other words, if the vibration frequency $f_{vib}$ varies over time, the joint use of SMDE MTT and of any ETT is necessary in order to fully optimize the performance of a REVEH harvester.

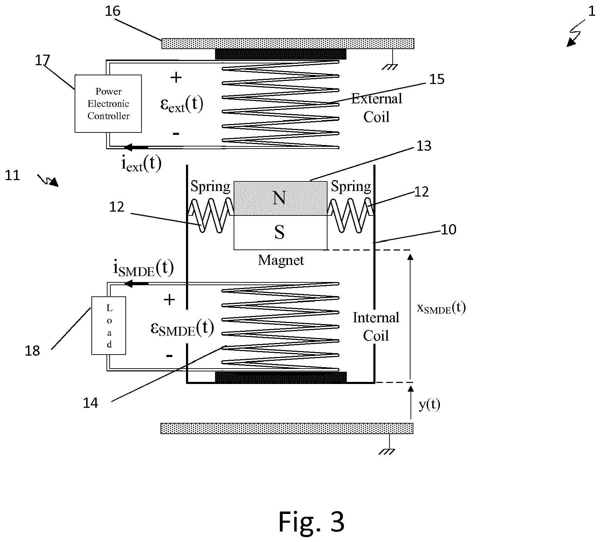

According to the present invention, a SMDE MTT technique is proposed. This technique is based on the use of an external coil 15 through which an appropriate current passes with the aim of emulating adjustable stiffness, mass and viscous friction coefficient values. In particular, the adjustable stiffness will be expressed as $k_s + k_s^*$, the adjustable mass as $m + m^*$ and the adjustable viscous friction coefficient as $c + c^*$. It should be noted that $k_s^*$, $m^*$ and $c^*$ can be greater than or less than zero as they represent suitable variations with respect to the corresponding original quantities ($k_s$, $m$ and $c$). The desired current which must flow into the external coil 15 can be regulated by the use of an appropriate power electronics circuit or electrical control circuit 17. It should be noted that the control of the harvester according to the present invention, i.e. the SMDE REVEH (and its architecture) is certainly easier to implement than the mechanical actuators belonging to the state of the art. The parameters of the external coil 15 are as follows: resistance $R_{c\_ext}$, inductance $L_{c\_ext}$ and electromechanical coupling coefficient $\theta_{ext}$. A schematic representation of the harvester according to the present invention (SMDE REVEH) is shown in figure 3. In addition to the elements present in a conventional harvester shown in figure 1, the harvester SMDE REVEH comprises a coil 15 outside the housing 10.

The substantial difference between the inner coil 14 and the outer coil 15 is represented by the fact that the first is connected to the housing 10 of the REVEH and moves integral with it, while the second is anchored to a fixed point. In practice, this has repercussions on the emf induced in the two coils. In particular, the emf induced in the internal coil 14 will be equal to $\theta_{int} \cdot \dot{x}_{SMDE}(t)$ (the SMDE subscript is used to indicate the fact that the SMDE MTT technique is applied), while that induced in the external coil 15 will be given by $\theta_{ext} \cdot [\dot{x}_{SMDE}(t) + \dot{y}(t)]$. It should be noted that in the following the mutual electromagnetic coupling between the two coils will be considered negligible. This simplifying hypothesis is reasonable because the two coils are placed at opposite sides of the magnet 13 which vibrates and therefore at a relatively large distance from each other (see Fig. 3). In fact, as is well known, to maximize the electro-mechanical coupling coefficient $\theta$ between each coil 14, 15 and the magnet 13, the distance between each of these and the magnet itself cannot be less than a certain optimal distance.

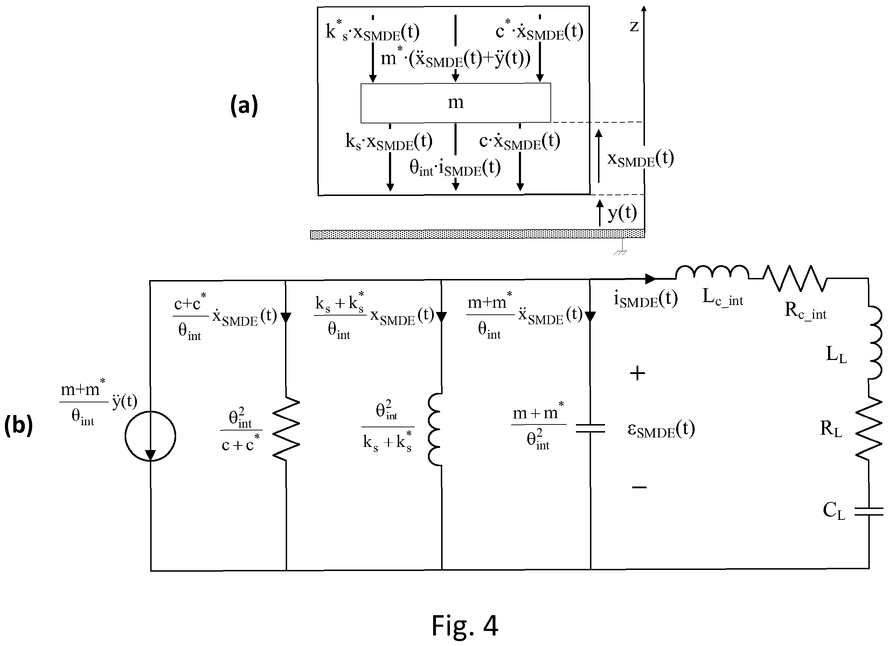

The injection of current into the external coil 15 is intended to emulate, through the electromagnetic force $\theta_{ext} \cdot i_{ext}(t)$ exerted on the magnet 13, the sum of three additional forces as shown in Fig. 4a. These forces are $k_s^* \cdot x_{SMDE}(t)$ (elastic force), $m^* \cdot [\ddot{x}_{SMDE}(t) + \ddot{y}(t)]$ (inertial force) and $c^* \cdot \dot{x}_{SMDE}(t)$ (viscous friction force).

The application along the axis z of Newton's second law to the system of Fig. 4a leads to the writing of the following equation which regulates the pattern in time of the relative displacement $x_{SMDE}(t)$ between the magnet 13 and the internal coil 14:

$$\frac{m+m^*}{\theta_{int}}\ddot{x}_{SMDE}\left(t\right)+\frac{c+c^*}{\theta_{int}}\dot{x}_{SMDE}\left(t\right)+\frac{k_s+k_s^*}{\theta_{int}}x_{SMDE}\left(t\right)+i_{SMDE}\left(t\right)=-\frac{m+m^*}{\theta_{int}}\ddot{y}\left(t\right)$$

**Equation (14)**

In the equation (14) the SMDE subscript was used to underline the fact that the SMDE MTT technique is applied. In practice, equation (14) was obtained from equation (1) substituting $k_s$ with $k_s + k_s^*$, $m$ with $m + m^*$ and $c$ with $c + c^*$. The emf which is induced in the inner coil 14 is therefore:

$$\varepsilon_{SMDE}(t)=\dot{x}_{SMDE}\left(t\right)\theta_{int}$$

**Equation (15)**

So the new resonance frequency $f_{opt}^*$ will be:

$$\omega_{opt}^* = 2\pi f_{opt}^* = \sqrt{\frac{k_s + k_s^*}{m + m^*}}$$

**Equation (16)**

In conclusion, the objective of the SMDE MTT technique is to apply a Lorentz force $\theta_{ext}\cdot i_{ext}(t)$ to the magnet 13 in order to emulate the three desired additional forces (Fig. 4a). This result can be achieved by regulating the current $i_{ext}(t)$ in the external coil 15 so that the electromagnetic force exerted by it on the magnet $\theta_{ext}\cdot i_{ext}(t)$ is exactly equal to the desired force (equation (17)):

$$F_{ext} = -\theta_{ext} \cdot i_{ext}(t) = -k_s^* \cdot x_{SMDE}(t) - c^* \cdot \dot{x}_{SMDE}(t) - m^* \cdot (\ddot{x}_{SMDE}(t) + \ddot{y}(t))$$

**Equation (17)**

The electrical circuit equivalent to the equation (14) is shown in Fig. 4b. Note that the circuit in Fig. 4b coincides with the circuit of Fig. 2b provided that the inductance $\theta_{int}^2/k_s$ is replaced with the inductance $\theta_{int}^2/(k_s + k_s^*)$, the capacity $m/\theta_{int}^2$ is replaced with the capacity $(m + m^*)/\theta_{int}^2$ and the resistance $\theta_{int}^2/c$ is replaced with the resistance $\theta_{int}^2/(c + c^*)$. In the case where $k_s^* = 0$, $m^* = 0$ and $c^* = 0$, $x_{SMDE}(t) = x(t)$ is obtained; otherwise, $x_{SMDE}(t) \neq x(t)$.

The current in the load in Fig. 4b takes the following expression:

$$I_{SMDE}(\omega)=\frac{-(m+m^*)\cdot a \cdot j\omega\theta_{int}}{\left[\left[R_{c\_int}+R_L+j\cdot\left(X_{c\_int}(\omega)+X_L(\omega)\right)\right]\cdot\left[\left(k_s+k_s^*\right)-(m+m^*)\cdot\omega^2+j\omega(c+c^*)\right]+j\omega\theta_{int}^2\right]}$$

**Equation (18)**

In practice, equation (18) was obtained from equation (8) replacing $k_s$ with $k_s + k_s^*$, $m$ with $m + m^*$ and $c$ with $c + c^*$. The load impedance that maximizes the power supplied to the load at a given frequency assumes the following expression:

$$X_{L\_opt\_SMDE}(\omega)=\frac{\theta_{int}^2\left[(m+m^*)\cdot\omega^2-\left(k_s+k_s^*\right)\right]\omega}{\left[\left(k_s+k_s^*\right)-(m+m^*)\cdot\omega^2\right]^2+\left((c+c^*)\omega\right)^2}-X_{c\_int}$$

**Equation (19.1)**

$$R_{L\_opt\_SMDE}(\omega)=R_{c\_int} + \frac{\theta_{int}^2(c+c^*)\cdot\omega^2}{\left[\left(k_s + k_s^*\right)-(m+m^*)\cdot\omega^2\right]^2 + \left((c+c^*)\omega\right)^2}$$

**Equation (19.2)**

In practice, equations (19.1 and 19.2) were obtained from equations (10.1 and 10.2) by replacing $k_s$ with $k_s + k_s^*$, $m$ with $m + m^*$ and $c$ with $c + c^*$. The power $P_{LOAD\_SMDE}(R_{L\_opt\_SMDE}(\omega),X_{L\_opt\_SMDE}(\omega),\omega)$ supplied to this optimal load is equal to:

$$P_{LOAD\_SMDE}\left(R_{L\_opt\_SMDE}(\omega),X_{L\_opt\_SMDE}(\omega),\omega\right)=$$

$$=\frac{1}{8}\frac{a^2\theta_{int}^2(m+m^*)^2\omega^2}{R_{c\_int}\left[\left(k_s+k_s^* - (m+m^*)\omega^2\right)^2 + \left((c+c^*)\omega\right)^2\right]+(c+c^*)\left(\omega\theta_{int}\right)^2}$$

**Equation (20)**

In practice, also equation (20) was obtained from equation (11) replacing $k_s$ with $k_s + k_s^*$, $m$ with $m + m^*$ and $c$ with $c + c^*$. Note that, at the new resonance frequency $f_{opt}^*$, we have:

$$P_{LOAD\_SMDE\_MAX}=\frac{1}{8}\frac{a^2\theta_{int}^2(m+m^*)^2}{R_{c\_int}\cdot(c+c^*)^2+(c+c^*)\cdot\theta_{int}^2}$$

**Equation (21)**

By using equation (17) it is possible to obtain the expression of the current which must be injected into the external coil 15 in order to obtain the emulation of the desired additional force:

$$i_{ext}(t) = \frac{k_s^*\cdot x_{SMDE}(t) + c^*\cdot \dot{x}_{SMDE}(t) + m^*\cdot(\ddot{x}_{SMDE}(t)+\ddot{y}(t))}{\theta_{ext}}$$

**Equation (22)**

Obviously, in order to implement the SMDE MTT technique, a certain non-zero power $P_{SMDE}$ is required. It is therefore necessary to evaluate this power. In particular, using the $<\beta>$ symbol to identify the average of the time-varying quantity $\beta(t)$ (over a time interval of $2\pi/\omega$), it must be:

$$P_{SMDE} =< i_{ext}(t)\cdot v_{ext}(t) >=< i_{ext}(t)\cdot\left[R_{c\_ext}\cdot i_{ext}(t) + L_{c\_ext}\cdot\frac{di_{ext}(t)}{dt}-\theta_{ext}\cdot(\dot{x}_{SMDE}(t)+\dot{y}(t))\right] >=$$

$$=\frac{1}{2}R_{c\_ext}\left|I_{ext}(\omega)\right|^2 - <\theta_{ext}\cdot(\dot{x}_{SMDE}(t)+\dot{y}(t))\cdot i_{ext}(t) >$$

**Equation (23)**

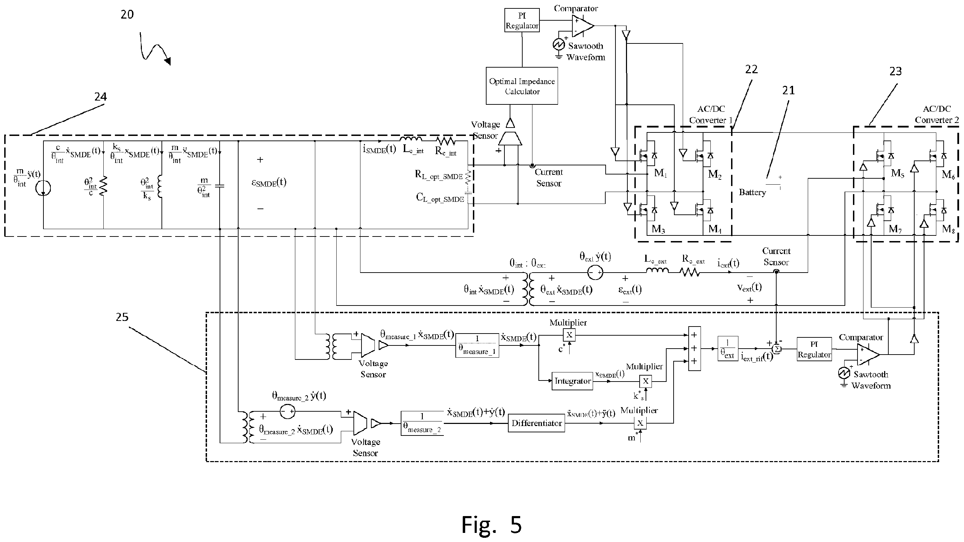

where $v_{ext}(t)$ represents the voltage at the output of the power electronics converter which regulates the current in the external coil 15 (see Fig. 5). We have:

$$< \theta_{ext} \cdot (\dot{x}_{SMDE}(t) + \dot{y}(t)) \cdot i_{ext}(t) >=$$

$$=< \theta_{ext} \cdot (\dot{x}_{SMDE}(t) + \dot{y}(t)) \cdot \frac{k_s^* \cdot x_{SMDE}(t) + c^* \cdot \dot{x}_{SMDE}(t) + m^* \cdot (\ddot{x}_{SMDE}(t) + \ddot{y}(t))}{\theta_{ext}} >=$$

$$=< k_s^* \cdot x_{SMDE}(t)\dot{y}(t) + c^* \cdot (\dot{x}_{SMDE}(t))^2 + c^* \cdot \dot{x}_{SMDE}(t)\dot{y}(t) >$$

**Equation (24)**

Then:

$$P_{SMDE} = \frac{1}{2} R_{c\_ext} |I_{ext}(\omega)|^2 - \frac{1}{2} k_s^* \cdot Re\left\{ X_{SMDE}(\omega) \cdot j\frac{a}{\omega} \right\} - \frac{1}{2} c^* \cdot |\omega X_{SMDE}(\omega)|^2 - \frac{1}{2} c^* \cdot Re\{-X_{SMDE}(\omega) \cdot$$

**Equation (25)**

Since $P_{SMDE}$ depends on $I_{ext}(\omega)$ and $X_{SMDE}(\omega)$, it is necessary to evaluate the final expression of such quantities. The equations (14) and (15) written in the frequency domain become:

$$\frac{m+m^*}{\theta_{int}}\left[-\omega^2 X_{SMDE}(\omega)\right] + \frac{c+c^*}{\theta_{int}}\left[j\omega X_{SMDE}(\omega)\right] + \frac{k_s+k_s^*}{\theta_{int}} X_{SMDE}(\omega) + I_{SMDE}(\omega) = -\frac{m+m^*}{\theta_{int}}a$$

**Equation (26)**

$$E_{SMDE}(\omega) = j\omega X_{SMDE}(\omega) \cdot \theta_{int}$$

**Equation (27)**

Furthermore, the loop equation represented by the internal coil 14 is:

$$I_{SMDE}(\omega) \cdot \left[ R_{c\_int} + R_L(\omega) + j \cdot \left( X_{c\_int}(\omega) + X_L(\omega) \right) \right] = E_{SMDE}(\omega) = j\omega X_{SMDE}(\omega) \cdot \theta_{int}$$

**Equation (28)**

Then the following relation is obtained:

$$I_{SMDE}(\omega) = X_{SMDE}(\omega) \cdot \frac{j\omega \theta_{int}}{\left[ R_{c\_int} + R_L(\omega) + j \cdot \left( X_{c\_int}(\omega) + X_L(\omega) \right) \right]}$$

**Equation (29)**

Using equations (26) and (29), the following expression of $X_{SMDE}(\omega)$ is obtained:

$$X_{SMDE}(\omega) = -\frac{(m+m^*) \cdot a}{\left[ -\omega^2 \cdot (m+m^*) + j\omega \cdot (c+c^*) + k_s + k_s^* + \frac{j\omega \theta_{int}^2}{\left[ R_{c\_int} + R_L(\omega) + j \cdot \left( X_{c\_int}(\omega) + X_L(\omega) \right) \right]} \right]}$$

**Equation (30)**

At this point $I_{ext}(\omega)$ can be evaluated by rewriting the equation (22) in the frequency domain:

$$I_{ext}(\omega) = \frac{k_s^* \cdot X_{SMDE}(\omega) + c^* \cdot j\omega X_{SMDE}(\omega) + m^* \cdot (-\omega^2 X_{SMDE}(\omega) + a)}{\theta_{ext}}$$

**Equation (31)**

Equations (30) and (31) provide the desired expressions of $I_{ext}(\omega)$ and $X_{SMDE}(\omega)$ that are necessary to evaluate the power $P_{SMDE}$ (see equation (25)).

As discussed above, the practical utility of the proposed SMDE MTT technique is closely linked to the values assumed by $P_{LOAD\_SMDE}(2\pi f_{vib})$ - $P_{SMDE}(2\pi f_{vib})$ (net mean power extracted by applying SMDE MTT) and by $P_{BENCHMARK}(2\pi f_{vib})$. $P_{BENCHMARK}(2\pi f_{vib})$ represents the maximum among $P_{SERIES}(2\pi f_{vib})$, $P_{ORIGINAL}(2\pi f_{vib})$ and $P_{EXTERNAL}(2\pi f_{vib})$. In the following, for simplicity but without any loss of generality, an external coil 15 identical to the internal coil 14 ($R_{c\_ext} = R_{c\_int}$, $L_{c\_ext} = L_{c\_int}$ and $\theta_{ext} = \theta_{int}$) will be considered. If the external coil 15 is identical to the internal coil 14 then $P_{ORIGINAL}(2\pi f_{vib}) = P_{EXTERNAL}(2\pi f_{vib})$ and therefore $P_{BENCHMARK}(2\pi f_{vib})$ will be the maximum between $P_{SERIES}(2\pi f_{vib})$ and $P_{ORIGINAL}(2\pi f_{vib})$ only. In practice, the need to consider $P_{SERIES}(2\pi f_{vib})$, in addition to $P_{ORIGINAL}(2\pi f_{vib})$, is linked to the fact that, since the use of an additional coil is intended for the implementation of the SMDE MTT technique, it is also fair to consider the possible improvement of performance that can be obtained by using also this external coil 15 in the standard way. Note that, in the case of the SERIES REVEH, both the external and the internal coil, which are connected in series, are anchored to the housing of the harvester. This means that there is no relative displacement between the two coils as it happens in the case of SMDE REVEH. Obviously, the series connection of the coils in the SERIES REVEH involves the increase of the electromechanical coupling coefficient (desired effect) but also the increase of resistance (undesired effect). On the basis of the previous discussion, the expression of $P_{SERIES}(\omega)$ can be easily obtained considering that the electromechanical coupling coefficient of SERIES REVEH is equal to $\theta_{int} + \theta_{ext}$, the total inductance of its coil is equal to $L_{c\_int} + L_{c\_ext}$ and the total resistance of its coil is $R_{c\_int} + R_{c\_ext}$.

Then:

$$P_{SERIES}(\omega) = \frac{1}{8} \frac{a^2 (\theta_{int} + \theta_{ext})^2 m^2 \omega^2}{(R_{c\_int} + R_{c\_ext})\left[(k_s - m\omega^2)^2 + (c\omega)^2\right] + c(\omega\theta_{int} + \omega\theta_{ext})^2}$$

**Equation (32)**

Obviously, for the SERIES REVEH to extract the power $P_{SERIES}(\omega)$, it is necessary to use the following optimal load $R_{L\_opt\_series}(\omega) + j X_{L\_opt\_series}(\omega)$:

$$X_{L\_opt\_series}(\omega) = \frac{(\theta_{int} + \theta_{ext})^2 (m \cdot \omega^2 - k_s)\omega}{(k_s - m \cdot \omega^2)^2 + (c\omega)^2} - (X_{c\_int}(\omega) + X_{c\_ext}(\omega))$$

**Equation (33.1)**

$$R_{L\_opt\_series}(\omega) = R_{c\_int} + R_{c\_ext} + \frac{(\theta_{int} + \theta_{ext})^2 c \cdot \omega^2}{(k_s - m \cdot \omega^2)^2 + (c\omega)^2}$$

**Equation (33.2)**

In conclusion, the SMDE MTT technique is only useful if:

$$P_{LOAD\_SMDE}(2\pi f_{vib}) - P_{SMDE}(2\pi f_{vib}) > P_{BENCHMARK}(2\pi f_{vib})$$

**Equation (34)**

Furthermore, in order to maximize the quantity $P_{LOAD\_SMDE}(2\pi f_{vib})$ - $P_{SMDE}(2\pi f_{vib})$ - $P_{BENCHMARK}(2\pi f_{vib})$, in general it must be $f_{opt}^* \neq f_{vib}$. In other words, as shown below, in order to obtain the optimal performance of the SMDE MTT technique at the frequency $f_{vib}$, it is necessary to set the new mechanical resonance frequency $f_{opt}^*$ to a different value with respect to the vibration frequency $f_{vib}$.

Fig. 5 shows the architecture of the entire SMDE MTT REVEH 20 system. Applications of this type of system include, for example, the supply of sensors for environmental monitoring, the powering of monitoring and industrial control and safety systems, the feeding of wireless sensor networks and the power supply of electronic devices for the Internet of Things. Moreover, the greater availability of energy, which the proposed system guarantees compared to existing systems, makes it possible to extend the practical uses of existing vibration harvesters to user systems that require higher levels of energy.

It is worth noting that the components of the architecture shown in Figure 5 enclosed within the dotted box at the bottom constitute the control circuit 25 of the current to be injected into the second coil or external coil 15 so as to obtain the emulation of the mass-spring-damper system.

The system includes the ORIGINAL REVEH energy harvester as previously described, the equivalent circuit of which is indicated by the reference 24 in figure 5 and an external coil. A battery 21 is powered by an internal active AC/DC converter 22 (the AC/DC converter connected to the internal coil 14, AC/DC Converter 1). The direction of the energy flow through this converter 22 is from the internal coil 14 to the battery / load ($P_{LOAD\_SMDE} > 0$). Moreover, this battery 21 is also connected to the external coil 15 by means of a second electronic power converter 23 (AC/DC Converter 2). As shown successively, the direction of the energy flow through this converter 23 may be from the battery 21 towards the external coil 15 ($P_{SMDE} > 0$) or from the external coil 15 towards the battery / load ($P_{SMDE} < 0$). Obviously, in order to implement the SMDE MTT technique, as shown in Fig. 5, it is necessary to know $x_{SMDE}(t)$, $\dot{x}_{SMDE}(t)$, $\ddot{x}_{SMDE}(t)$ and $\ddot{y}(t)$ (see equation (22)). In practice, in order to obtain such quantities, it is sufficient to know $\dot{x}_{SMDE}(t)$ and $\dot{x}_{SMDE}(t) + \dot{y}(t)$. $\dot{x}_{SMDE}(t)$ can be obtained by measuring the open circuit voltage ($\theta_{measure\_1} \cdot \dot{x}_{SMDE}(t)$) of a sensing coil 1 operating in an open circuit and anchored to the SMDE REVEH housing 10 (like the internal coil 14). $\theta_{measure\_1}$ is the electromechanical coupling coefficient of this sensing coil 1. Instead, $\dot{x}_{SMDE}(t) + \dot{y}(t)$ can be obtained by measuring the open circuit voltage ($\theta_{measure\_2} \cdot [\dot{x}_{SMDE}(t) + \dot{y}(t)]$) of a sensing coil 2 operating in open circuit and anchored to a fixed point (like the outer coil 15). $\theta_{measure\_2}$ is the electromechanical coupling coefficient of this sensing coil 2. What will be analysed in detail later is the energy balance of the system of Fig. 5. The results that are shown and discussed have been obtained assuming an ideal functioning of both the internal active AC/DC converter and the one connected to the external coil 15. In other words, it will be assumed that the currents that circulate both in the external coil 15 and in the internal coil 14 are perfectly sinusoidal.

With the help of the results of a series of numerical simulations it is possible to demonstrate the validity of the SMDE MTT technique. In particular, two REVEH harvesters are considered. The first considered REVEH (REVEH 1) has the following mechanical parameters: $m$ = 0.022 kg, $k_s$ = 3371 N/m, $c$ = 0.345 N·s/m, $\theta_{int}$ = 5.64 N/A, $R_{c\_int}$ = 1.6 Ω, $L_{c\_int}$ = 250 μH. Its resonance frequency is $f_{opt}$ = 62.3 Hz. At $a$ = 1 g (peak acceleration value) and at the resonance frequency, REVEH 1 is able to supply to its optimal load a power equal to $P_{MAX}$ = 16.5 mW. In the following, the $\Delta P\%$ symbol will indicate the quantity defined as follows:

$$\Delta P\% = \frac{P_{LOAD\_SMDE}(f_{vib}) - P_{SMDE}(f_{vib}) - P_{BENCHMARK}(f_{vib})}{P_{BENCHMARK}(f_{vib})} \cdot 100$$

**Equation (35)**

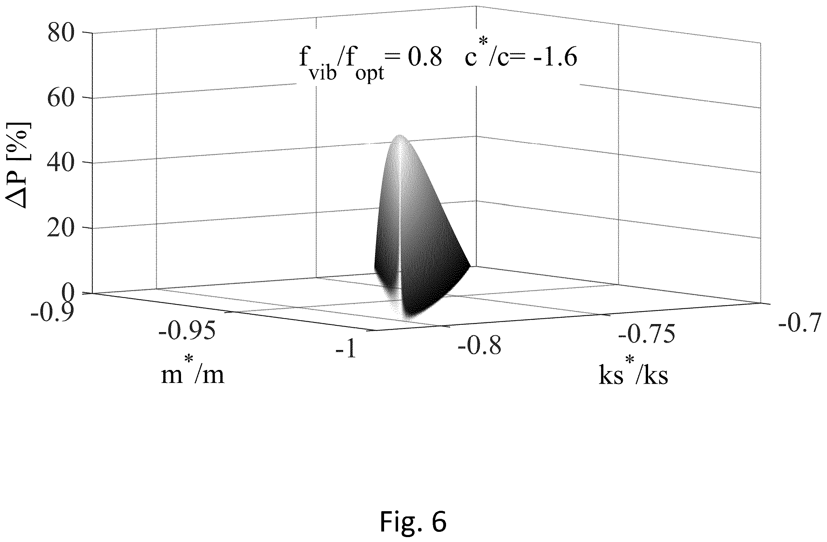

$\Delta P\%$ depends on $c^*$, $m^*$, $k_s^*$ and obviously on $f_{vib}$. For example, in Fig. 6, the pattern of $\Delta P\%$ as a function of $m^*$ and $k_s^*$, for a fixed value of $c^*$ and $f_{vib}$ is reported. For reasons of clarity of representation, in Fig. 6 the surface portion characterized by negative values of $\Delta P\%$ has been replaced with a flat surface of zero value. This means that only the operating region has been highlighted where the SMDE MTT technique is of practical use. In Fig. 6, the horizontal axes report the normalized quantities $k_s^*/k_s$ and $m^*/m$, while the used fixed normalized values of $c^*$ and $f_{vib}$ are: $c^*/c$ = -1.6 and $f_{vib}/f_{opt}$ = 0.8. This means that a vibration frequency that is less (80%) than the original resonance frequency $f_{opt}$ of REVEH 1 was considered.

The maximum value $\Delta P_{MAX}\%$ of $\Delta P\%$ in Fig. 6 is about 47% and is obtained at $k_s^*/k_s$ = -0.76 and $m^*/m$ = -0.94. In fact, for every value of $c^*$, a pair of values of $k_s^*$ and $m^*$ exists for which $\Delta P\%$ assumes its maximum value $\Delta P_{MAX}\%$.

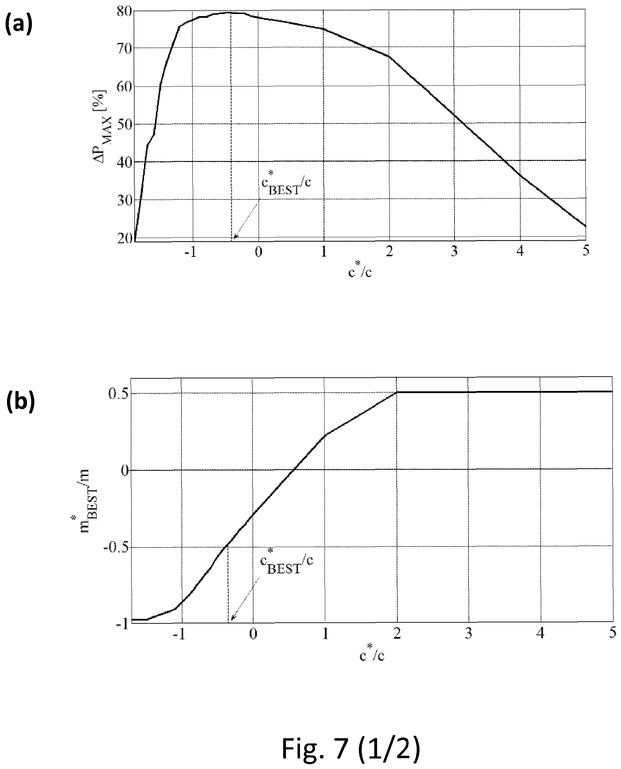

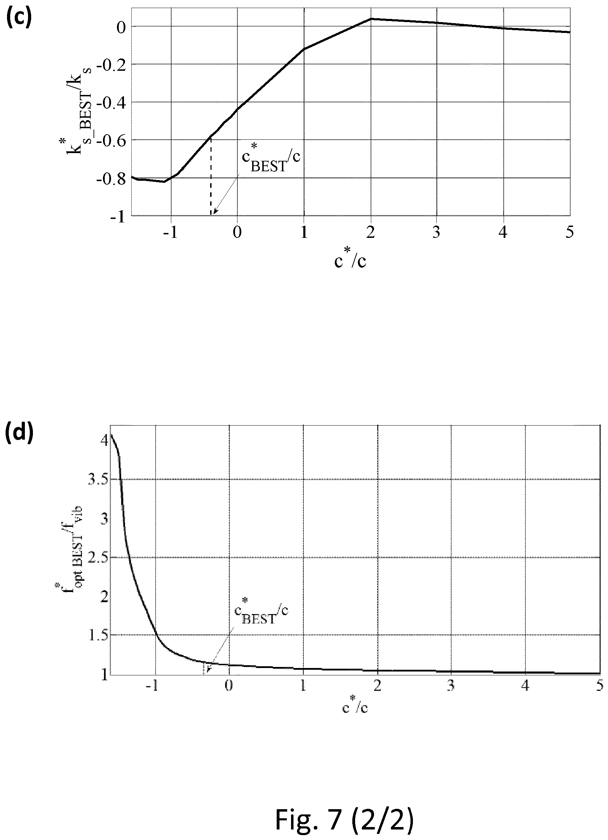

In the following, the values of $k_s^*$ and $m^*$ which, for a given value of $c^*$, lead to the maximum value of $\Delta P\%$ will be indicated respectively as $k_{s\_BEST}^*$ and $m_{BEST}^*$. In practice, since the identification of the best performances that can be obtained when the SMDE MTT technique is applied to REVEH 1 is of interest, the identification of the absolute maximum $\Delta P_{MAX\_TOT}\%$ of $\Delta P_{MAX}\%$ is of interest. Thus, a number of numerical simulations have been performed with different values of $c^*$. For each value of $c^*$, the pair of values $k_{s\_BEST}^*$ and $m_{BEST}^*$ have been numerically identified by means of appropriate scans of each of the two parameters ($k_s^*$ and $m^*$). In Fig. 7a, the curve $\Delta P_{MAX}\%$ vs. $c^*/c$ is reported at $f_{vib}/f_{opt} = 0.8$. The value $c^*/c = c_{BEST}^*/c = -0.4$ ($c_{BEST}^*$ indicates the value of $c^*$ which, for a given frequency $f_{vib}$, allows to obtain the maximum value of $\Delta P\%$) allows to obtain $\Delta P_{MAX\_TOT}\% = 79\%$ (as shown in Fig. 7a). The corresponding values of $m_{BEST}^*/m$ and $k_{s\_BEST}^*/k_s$ are: $m_{BEST}^*/m = -0.51$ (as shown in Fig. 7b) and $k_{s\_BEST}^*/k_s = -0.58$ (as shown in Fig. 7c) . Figure 7d also shows the pattern of normalized frequency $f_{opt\_BEST}^*/f_{vib}$ as a function of $c^*/c$ at $f_{vib}/f_{opt} = 0.8$. The value of $f_{opt\_BEST}^*$ has been identified according to equation (16) by using, for each value of $c^*$, the corresponding values of $k_{s\_BEST}^*$ and $m_{BEST}^*$. In practice, Fig. 7d clearly indicates that, for each value of $c^*$, in order to obtain the best performance, it is necessary to set the $f_{opt\_BEST}^*$ resonance frequency of the system to a value higher than the vibration frequency $f_{vib}$. For example, at $f_{vib}/f_{opt} = 0.8$, in the optimal operating point of the SMDE REVEH 1 ($c_{BEST}^*/c = -0.4$, $k_{s\_BEST}^*/k_s = -0.58$, $m_{BEST}^*/m = -0.51$, $\Delta P_{MAX\_TOT}\% = 79\%$, see Figures 7a-d) it is $f_{opt\_BEST}^*/f_{vib} = 1.18$ (Fig. 7d). This is a completely unexpected result, as one could intuitively expect that $f_{opt\_BEST}^*$ should be chosen to be coincident with $f_{vib}$.

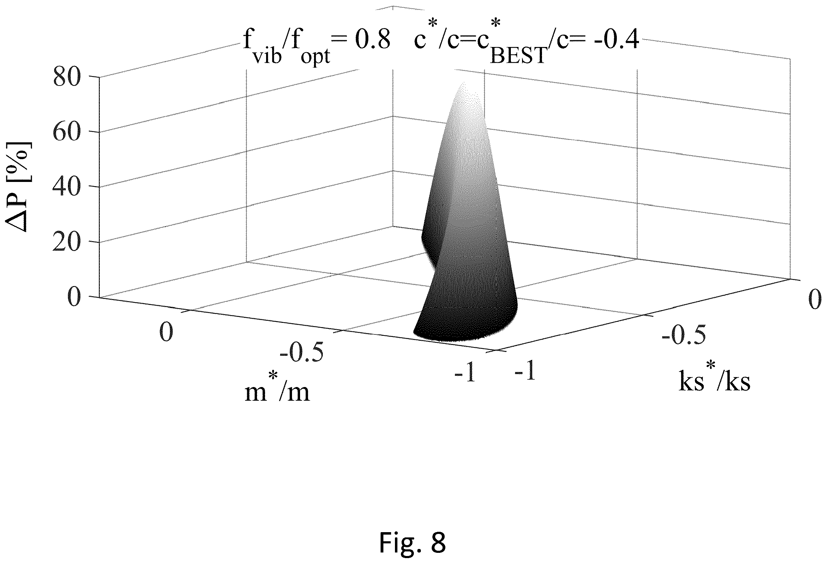

Figure 8, on the other hand, shows the pattern of $m^*/m$ and $k_s^*/k_s$ ($c^*/c = c_{BEST}^*/c = -0.4$ and $f_{vib}/f_{opt} = 0.8$).

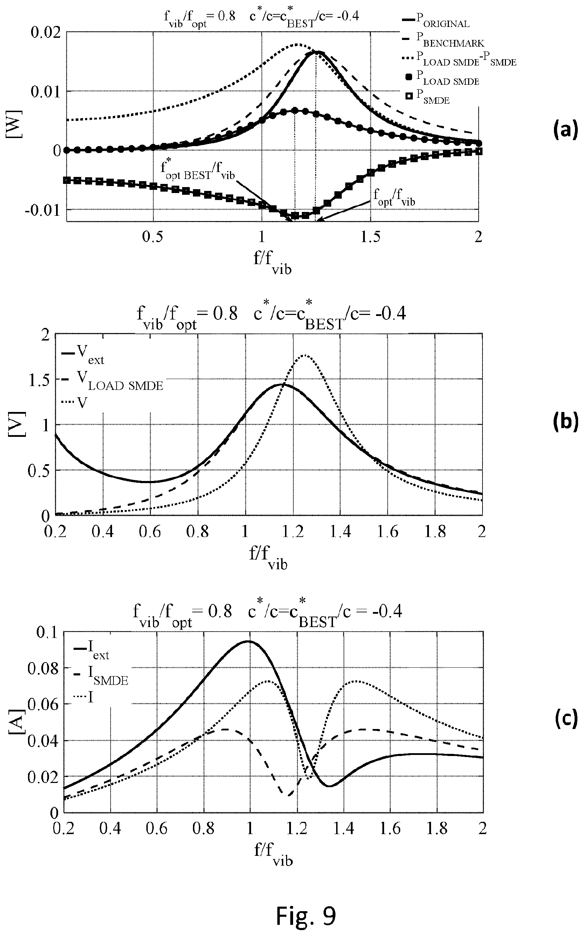

The curves shown in figure 9a, which refer to the maximum of the case shown in Fig. 8 ($c^*/c = c_{BEST}^*/c = -0.4$, $f_{vib}/f_{opt} = 0.8$, $k_{s\_BEST}^*/k_s = -0.58$, $m_{BEST}^*/m = -0.51$), clearly indicate that $\Delta P\%$ takes on its maximum value ($\Delta P_{MAX\_TOT}\% = 79\%$) at $f/f_{vib} = 1$ when $f_{opt\_BEST}^*/f_{vib} = 1.18$ and $f_{opt}/f_{vib} = 1/0.8 = 1.25$. In other words, the best performances are obtained with an emulated resonance frequency $f_{opt\_BEST}^*$ which is greater than $f_{vib}$, but smaller than the original mechanical resonance frequency $f_{opt}$ of REVEH. Note that, at $f = f_{vib}$, $P_{LOAD\_SMDE}$ is positive and therefore represents a power that is supplied to the load. In other words, the flow direction of $P_{LOAD\_SMDE}$ goes from the internal coil 14 of the SMDE REVEH 1 towards the battery. Moreover, at $f = f_{vib}$, $P_{SMDE}$ is negative. This means that the electronic power converter that regulates the current in the external coil (Fig. 5) absorbs (and does not inject) power from this coil. Thus, the direction of the power flow of $P_{SMDE}$ goes from the external coil 15 of the SMDE REVEH 1 towards the battery. In conclusion, under the considered operating conditions, the power is supplied to the battery by both coils.

For completeness, Fig. 9b shows the patterns (Fourier transform module), depending on the frequency, the load voltage ($V_{LOAD\_SMDE}$) of the internal coil 14 of the SMDE REVEH 1 and that (V) of the internal coil of the ORIGINAL REVEH 1, i.e. of the conventional harvester. The same figure also shows the pattern as a function of the voltage frequency ($V_{ext}$) to the output of the electronic power converter which regulates the current in the external coil 15 of SMDE REVEH 1.

Furthermore, Fig. 9c reports the patterns (Fourier transform module) as a function of the load current frequency ($I_{SMDE}$) of the internal coil 14 of the SMDE REVEH 1 and of the load current (I) of the internal coil of the ORIGINAL REVEH 1, i.e. of the conventional harvester. The same figure also shows the pattern as a function of the frequency of the current ($I_{ext}$) injected by the power electronics converter into the external coil 15 of the SMDE REVEH 1.

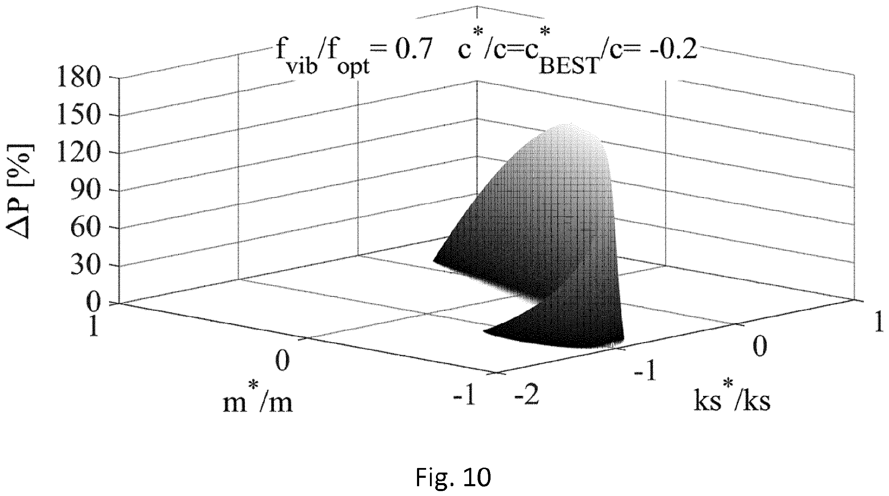

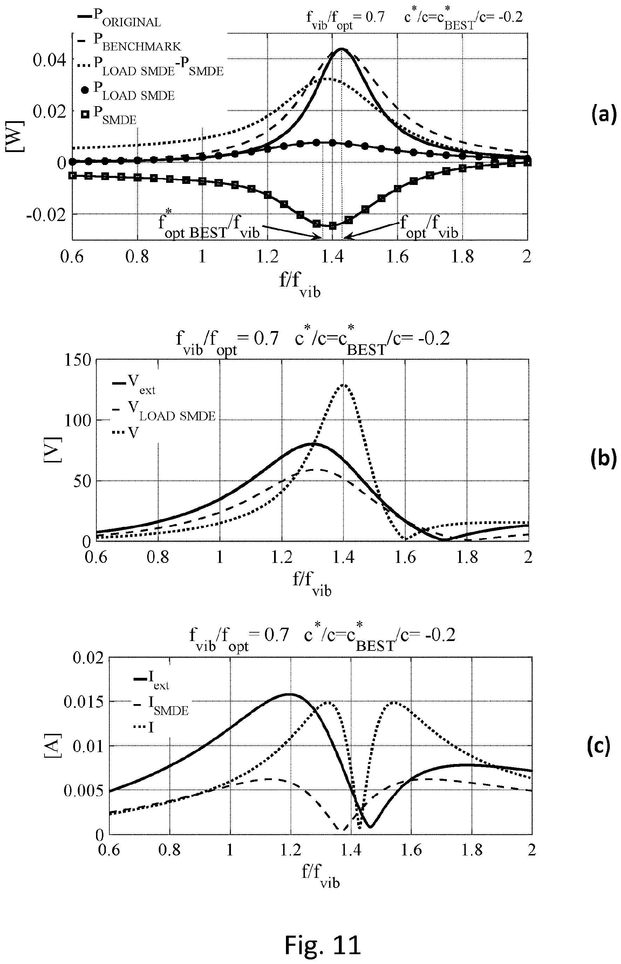

As for the second considered harvester (REVEH 2), this is a device with the following mechanical parameters: $m = 0.83$ kg, $k_s = 296$ kN/m, $c = 1.882$ N·s/m, $\theta_{int} = 552.25$ N/A, $R_{c\_int} = 99.5 \, \Omega$, $L_{c\_int} = 4$ H. Its mechanical resonance frequency is $f_{opt} = 95.1$ Hz. At $a = 100$ mg (peak acceleration value) and at its resonance frequency, REVEH 2 is able to supply its maximum load with a power $P_{MAX} = 2.7$ mW. In Fig. 10, the pattern of $\Delta P\%$ is reported as a function of $m^*/m$ e $k_s^*/k_s$ at $f_{vib}/f_{opt} = 0.7$ and $c^*/c = c_{BEST}^*/c = -0.2$ (which is the optimal value of $c^*/c$ for SMDE REVEH 2) . The corresponding maximum value $\Delta P_{MAX\_TOT}\%$ in Fig. 10 is equal to 161% and is obtained with $k_{s\_BEST}^*/k_s = -0.656$ and $m_{BEST}^*/m = -0.625$. In Fig. 11a, all the average powers of interest are reported ($k_{s\_BEST}^*/k_s = -0.656$, $m_{BEST}^*/m = -0.625$, $c^*/c = c_{BEST}^*/c = -0.2$, $f_{vib}/f_{opt} = 0.7$). It is possible to make similar considerations to those that have already been discussed with reference to Fig. 9a and which are not repeated here for conciseness. For completeness, Figures 11b and 11c also report the frequency patterns (Fourier transform module) of the main voltages and currents.

The comparison of figures 9(c) and 11(c) shows that the order of magnitude of the currents circulating in the two coils is almost the same.

In conclusion, the method to optimize the conversion of vibrational kinetic energy generated by an external source, into electrical energy, uses the SMDE MTT technique to be applied to a REVEH-type harvester. The aforementioned technique is based on the adoption of an external coil to be added to the standard architecture of a REVEH. The resulting REVEH (SMDE REVEH) is composed of two coils: an external coil 15 anchored to a fixed non-vibrating point and an internal coil 14 anchored to the REVEH casing 10. The current which circulates in the external coil 15 must be appropriately adjusted by means of a specific power electronics converter 17 (or electrical control circuit) so as to allow the emulation of the desired mass-spring-damper system. In this description the guidelines for the identification of operating conditions have also been proposed, leading to a positive net energy balance for the SMDE REVEH. Two different REVEHs were analysed numerically. The results of the numerical simulations have clearly shown that, in both cases, the proposed technique is efficient for vibration frequencies $f_{vib}$ that are lower than the mechanical resonance frequency $f_{opt}$ originating from the REVEH. In particular, in order to optimize the performance of the SMDE REVEH, the new mechanical resonance frequency $f^*_{opt\_BEST}$ must be set lower than the frequency $f_{opt}$ but higher than the vibration frequency $f_{vib}$.

The proposed method is also applicable to other types of harvesters such as magnetostrictive or piezoelectric types. In the case of piezoelectric harvester applications, it is possible to place a magnetic element at the tip of the piezoelectric cantilever and use a fixed coil whose current, appropriately controlled, allows to apply to the magnet a force necessary to vary the resonance frequency of the harvester by emulating an appropriate mass-spring-damper system.

A person skilled in the art can perform several and further modifications and variants to the harvester and the method described above, in order to satisfy further and contingent needs, all said modifications and variants being however included within the scope of protection of the present invention as defined by the appended claims.

**Claims**

1. Resonant vibration energy harvester (1) for optimizing the conversion of vibrational kinetic energy generated by an external source into electrical energy, the harvester comprising:

   a supporting housing (10) capable of vibrating in response to the external source; and
   an electromagnetic generator (11) coupled to the housing (10) and having a resonance frequency, wherein the generator (11) comprises:

   elastic means (12) placed within the housing (10) and fixed to a wall of said housing (10);
   at least one magnetic element (13), having a mass (m) and coupled to the housing (10) by said elastic means (12), wherein said elastic means (12) create a relative motion between the magnetic element (13) and the housing (10) itself and wherein the magnetic element (13) is a permanent magnet and the resonance frequency of the electromagnetic generator (11) is the mechanical resonance frequency of the magnetic element (13) with respect to the housing (10); and
   a first conductive winding (14) magnetically coupled to the magnetic element (13) and fixed to the housing (10) such that the vibrational kinetic energy generated by the external source determines a relative displacement (x) between the magnetic element (13) and the first winding (14) causing a potential difference to be generated at the ends of the first winding (14),
   **characterized by** the fact that
   the harvester (1) further comprises a second conductive winding (15) fixed to a non-vibrating support (16) and being stationary with respect to said support (16) and separated from the housing (10), wherein the distance between the first winding (14) and the second winding (15) is such as to make a mutual magnetic coupling between said first and second winding (14, 15) negligible; and
   control means (17) connected to the ends of the second winding (15) to introduce an electric current within the second winding (15) and regulate the intensity of said electric current so as to adapt the resonance frequency of the electromagnetic generator (11) to the vibration frequency associated to the vibrational kinetic energy generated by the external source.

2. Harvester (1) according to claim 1, wherein the elastic means (12) comprise a couple of coil springs each having one end fixed to the housing (10) and the other end fixed to the magnetic element (13).

3. Harvester (1) according to one of the preceding claims, further comprising an extraction electrical circuit and a storage circuit coupled to the ends of the first winding (14) .

4. Harvester (1) according to one of the preceding claims, wherein the first and the second winding (14, 15) are positioned on the opposite sides with respect to the magnetic element (13).

5. Harvester (1) according to one of the preceding claims, wherein the control means (17) comprise a control electrical circuit for the generation of electrical current and the consequent emulation of a mass-spring-damper system.

6. Harvester (1) according to claim 5, wherein the control electrical circuit (17) is configured to determine an emulated resonance frequency with a value that is higher than the vibration frequency and lower than the resonance frequency of the electromagnetic generator (11).

7. Harvester (1) according to one of the preceding claims, wherein the dimensions of the first winding (14) are different from those of the second winding (15).

8. System comprising a resonant vibration energy harvester (1) according to one of the claims from 1 to 7 and an electronic device coupled to said harvester (1).

9. Method for optimizing the conversion of vibrational kinetic energy generated by an external source into electrical energy, wherein the method comprises:

   providing a supporting housing (10) capable of vibrating in response to the external source; and
   coupling an electromagnetic generator (11) having a resonance frequency to the housing (10), wherein the generator (11) comprises elastic means (12) placed within the housing (10) and fixed to a wall of said housing (10), at least one magnetic element (13) having a mass (m) and coupled to the housing (10) by said elastic means (12), wherein said elastic means (12) create a relative motion among the magnetic element (13) and the housing (10) itself and wherein the magnetic element (13) is a permanent magnet and the resonance frequency of the electromagnetic generator (11) is the mechanical resonance frequency of the magnetic element (13) with respect to the housing (10) and a first conductive winding (14), magnetically coupled to the magnetic element (13) and fixed to the housing (10) such that the vibrational kinetic energy generated by the external source determines a relative displacement (x) between the magnetic element (13) and the first winding (14) causing a potential difference to be generated at the ends of the first winding (14),
   **characterized by**:

   providing a second conductive winding (15) fixed to a non-vibrating support (16) and being stationary with respect to said support (16) and separated from the housing (10),
   wherein the distance between the first winding (14) and the second winding (15) is such as to make a mutual magnetic coupling between said first and second winding (14, 15) negligible; and
   connecting control means (17) to the ends of the second winding (15), to inject an electric current within the second winding (15) and regulate the intensity of said electric current so as to adapt the resonance frequency of the electromagnetic generator (11) to the frequency or to the frequencies associated to the vibrational kinetic energy generated by the external source.

10. Method according to claim 9, further comprising emulating a mass-spring-damper system as a consequence of the introduction of electric current within the second winding (15) by connecting the control means (17) to the ends of the second winding (15).

**Patentansprüche**

1. Resonanzschwingungs-Energieerntevorrichtung (1) zum Optimieren der Umwandlung von kinetischer Schwingungsenergie, die durch eine externe Quelle erzeugt wird, in elektrische Energie, wobei die Erntevorrichtung umfasst:

   ein tragendes Gehäuse (10), das in der Lage ist, als Reaktion auf die externe Quelle zu schwingen; und
   einen elektromagnetischen Generator (11), der mit dem Gehäuse (10) gekoppelt ist und eine Resonanzfrequenz aufweist, wobei der Generator (11) umfasst:

   elastische Mittel (12), die innerhalb des Gehäuses (10) platziert und an einer Wand des Gehäuses (10) befestigt sind;
   mindestens ein magnetisches Element (13), das eine Masse (m) aufweist und mit dem Gehäuse (10) durch die elastischen Mittel (12) gekoppelt ist, wobei die elastischen Mittel (12) eine relative Bewegung zwischen dem magnetischen Element (13) und dem Gehäuse (10) selbst erzeugen und wobei das magnetische Element (13) ein Permanentmagnet ist und die Resonanzfrequenz des elektromagnetischen Generators (11) die mechanische Resonanzfrequenz des magnetischen Elements (13) in Bezug auf das Gehäuse (10) ist; und
   eine erste leitende Wicklung (14), die mit dem magnetischen Element (13) magnetisch gekoppelt und an dem Gehäuse (10) befestigt ist, sodass die kinetische Schwingungsenergie, die durch die externe Quelle erzeugt wird, eine relative Verschiebung (x) zwischen dem magnetischen Element (13) und der ersten Wicklung (14) bestimmt, welche zu einer Potentialdifferenz führt, die an den Enden der ersten Wicklung (14) erzeugt wird,

**gekennzeichnet durch** die Tatsache, dass

die Erntevorrichtung (1) ferner eine zweite leitende Wicklung (15) umfasst, die an einem nicht schwingenden Träger (16) befestigt und in Bezug auf den Träger (16) stationär sowie von dem Gehäuse (10) getrennt ist, wobei der Abstand zwischen der ersten Wicklung (14) und der zweiten Wicklung (15) derart bemessen ist, dass eine gegenseitige magnetische Kopplung zwischen der ersten und der zweiten Wicklung (14, 15) vernachlässigbar ist; und

Steuermittel (17), die mit den Enden der zweiten Wicklung (15) verbunden sind, um einen elektrischen Strom in die zweite Wicklung (15) einzuspeisen und die Intensität des elektrischen Stroms zu regeln, um die Resonanzfrequenz des elektromagnetischen Generators (11) an die Schwingungsfrequenz anzupassen, die der kinetischen Schwingungsenergie, die durch die externe Quelle erzeugt wird, zugeordnet ist.

2. Erntevorrichtung (1) nach Anspruch 1, wobei die elastischen Mittel (12) ein Paar Schraubenfedern umfassen, von denen jeweils ein Ende an dem Gehäuse (10) befestigt ist und das andere Ende an dem magnetischen Element (13) befestigt ist.

3. Erntevorrichtung (1) nach einem der vorhergehenden Ansprüche, ferner umfassend eine elektrische Extraktionsschaltung und eine Speicherschaltung, die mit den Enden der ersten Wicklung (14) gekoppelt sind.

4. Erntevorrichtung (1) nach einem der vorhergehenden Ansprüche, wobei die erste und die zweite Wicklung (14, 15) auf den gegenüberliegenden Seiten in Bezug auf das magnetische Element (13) positioniert sind.

5. Erntevorrichtung (1) nach einem der vorhergehenden Ansprüche, wobei die Steuermittel (17) eine elektrische Steuerschaltung für die Erzeugung von elektrischem Strom und die nachfolgende Emulation eines Masse-Feder-Dämpfer-Systems umfassen.

6. Erntevorrichtung (1) nach Anspruch 5, wobei die elektrische Steuerschaltung (17) eingerichtet ist, um eine emulierte Resonanzfrequenz mit einem Wert zu bestimmen, der höher als die Schwingungsfrequenz und niedriger als die Resonanzfrequenz des elektromagnetischen Generators (11) ist.

7. Erntevorrichtung (1) nach einem der vorhergehenden Ansprüche, wobei sich die Abmessungen der ersten Wicklung (14) von denen der zweiten Wicklung (15) unterscheiden.

8. System, umfassend eine Resonanzschwingungs-Energieerntevorrichtung (1) nach einem der Ansprüche 1 bis 7 und eine elektronische Vorrichtung, die mit der Erntevorrichtung (1) gekoppelt ist.

9. Verfahren zum Optimieren der Umwandlung von kinetischer Schwingungsenergie, die durch eine externe Quelle erzeugt wird, in elektrische Energie, wobei das Verfahren umfasst:

Bereitstellen eines tragenden Gehäuses (10), das in der Lage ist, als Reaktion auf die externe Quelle zu schwingen; und

Koppeln eines elektromagnetischen Generators (11), der eine Resonanzfrequenz aufweist, mit dem Gehäuse (10), wobei der Generator (11) umfasst: elastische Mittel (12), die innerhalb des Gehäuses (10) platziert und an einer Wand des Gehäuses (10) befestigt sind, mindestens ein magnetisches Element (13), das eine Masse (m) aufweist und mit dem Gehäuse (10) durch die elastischen Mittel (12) gekoppelt ist, wobei die elastischen Mittel (12) eine relative Bewegung zwischen dem magnetischen Element (13) und dem Gehäuse (10) selbst erzeugen und wobei das magnetische Element (13) ein Permanentmagnet ist und die Resonanzfrequenz des elektromagnetischen Generators (11) die mechanische Resonanzfrequenz des magnetischen Elements (13) in Bezug auf das Gehäuse (10) ist, und eine erste leitende Wicklung (14), die mit dem magnetischen Element (13) magnetisch gekoppelt und an dem Gehäuse (10) befestigt ist, sodass die kinetische Schwingungsenergie, die durch die externe Quelle erzeugt wird, eine relative Verschiebung (x) zwischen dem magnetischen Element (13) und der ersten Wicklung (14) bestimmt, welche zu einer Potentialdifferenz führt, die an den Enden der ersten Wicklung (14) erzeugt wird,

**gekennzeichnet durch**:

Bereitstellen einer zweiten leitenden Wicklung (15), die an einem nicht schwingenden Träger (16) befestigt und in Bezug auf den Träger (16) stationär sowie von dem Gehäuse (10) getrennt ist, wobei der Abstand zwischen der ersten Wicklung (14) und der zweiten Wicklung (15) derart bemessen ist, dass eine gegenseitige magnetische Kopplung zwischen der ersten und der zweiten Wicklung (14, 15) vernachlässigbar ist; und

Verbinden von Steuermitteln (17) mit den Enden der zweiten Wicklung (15), um einen elektrischen Strom in die zweite Wicklung (15) zu injizieren und die Intensität des elektrischen Stroms zu regeln, um die Resonanzfrequenz des elektromagnetischen Generators (11) an die Frequenz oder die Frequenzen anzupassen, die der kinetischen Schwingungsenergie, die durch die externe Quelle erzeugt wird, zugeordnet ist/sind.

10. Verfahren nach Anspruch 9, ferner umfassend Emulieren eines Masse-Feder-Dämpfer-Systems infolge der Einspeisung von elektrischem Strom in die zweite Wicklung (15), indem die Steuermittel (17) mit den Enden der zweiten Wicklung (15) verbunden werden.

## Revendications

1. Collecteur d'énergie de vibration résonante (1) pour l'optimisation de la conversion d'énergie cinétique vibrationnelle générée par une source externe en énergie électrique, le collecteur comprenant :

   un boîtier de support (10) capable de vibrer en réponse à la source externe ; et
   un générateur électromagnétique (11) accouplé au boîtier (10) et ayant une fréquence de résonance, le générateur (11) comprenant :

   un moyen élastique (12) placé à l'intérieur du boîtier (10) et fixé à une paroi dudit boîtier (10) ;
   au moins un élément magnétique (13), ayant une masse (m) et accouplé au boîtier (10) par ledit moyen élastique (12), dans lequel ledit moyen élastique (12) crée un mouvement relatif entre l'élément magnétique (13) et le boîtier (10) lui-même et l'élément magnétique (13) est un aimant permanent et la fréquence de résonance du générateur électromagnétique (11) est la fréquence de résonance mécanique de l'élément magnétique (13) par rapport au boîtier (10) ; et
   un premier enroulement conducteur (14) couplé magnétiquement à l'élément magnétique (13) et fixé au boîtier (10) de telle façon que l'énergie cinétique vibrationnelle générée par la source externe détermine un déplacement relatif (x) entre l'élément magnétique (13) et le premier enroulement (14) causant une différence de potentiel à générer aux extrémités du premier enroulement (14),

   **caractérisé en ce que**
   le collecteur (1) comprend en outre un deuxième enroulement conducteur (15) fixé à un support non-vibrant (16) tout en étant stationnaire par rapport audit support (16) et séparé du boîtier (10), la distance entre le premier enroulement (14) et le deuxième enroulement (15) étant choisie de manière à rendre infime un couplage magnétique mutuel entre lesdits premier et deuxième enroulements (14, 15) ; et
   un moyen de commande (17) connecté aux extrémités du deuxième enroulement (15) pour introduire un courant électrique dans le deuxième enroulement (15) et pour réguler l'intensité dudit courant électrique de manière à adapter la fréquence de résonance du générateur électromagnétique (11) à la fréquence de vibration associée à l'énergie cinétique vibrationnelle générée par la source externe.

2. Collecteur (1) selon la revendication 1, dans lequel le moyen élastique (12) comprend un couple de ressorts hélicoïdaux présentant respectivement une extrémité fixée au boîtier (10) et l'autre extrémité fixée à l'élément magnétique (13).

3. Collecteur (1) selon l'une des revendications précédentes, comprenant en outre un circuit électrique d'extraction et un circuit de stockage couplés aux extrémités du premier enroulement (14).

4. Collecteur (1) selon l'une des revendications précédentes, dans lequel les premier et deuxième enroulements (14, 15) sont positionnés sur les côtés opposés par rapport l'élément magnétique (13).

5. Collecteur (1) selon l'une des revendications précédentes, dans lequel le moyen de commande (17) comprend un circuit électrique de commande pour la génération d'un courant électrique et l'émulation consécutive d'un système masse-ressort-amortisseur.

6. Collecteur (1) selon la revendication 5, dans lequel le circuit électrique de commande (17) est configuré pour déterminer une fréquence de résonance émulée dont la valeur est supérieure à la fréquence de vibration et inférieure à la fréquence de résonance du générateur électromagnétique (11).

7. Collecteur (1) selon l'une des revendications précédentes, dans lequel les dimensions du premier enroulement (14) sont différentes de celles du deuxième enroulement (15).

8. Système comprenant un collecteur d'énergie de vibration résonante (1) selon l'une des revendications 1 à 7 et un dispositif électronique accouplé audit collecteur (1) .

9. Procédé d'optimisation de la conversion d'énergie cinétique vibrationnelle générée par une source externe en énergie électrique, le procédé comprenant :

la mise à disposition d'un boîtier de support (10) capable de vibrer en réponse à la source externe ; et
l'accouplement d'un générateur électromagnétique (11) ayant une fréquence de résonance au boîtier (10), le générateur (11) comprenant un moyen élastique (12) placé à l'intérieur du boîtier (10) et fixé à une paroi dudit boîtier (10), au moins un élément magnétique (13) ayant une masse (m) et accouplé au boîtier (10) par ledit moyen élastique (12), dans lequel ledit moyen élastique (12) crée un mouvement relatif entre l'élément magnétique (13) et le boîtier (10) lui-même et dans lequel l'élément magnétique (13) est un aimant permanent et la fréquence de résonance du générateur électromagnétique (11) est la fréquence de résonance mécanique de l'élément magnétique (13) par rapport au boîtier (10) et un premier enroulement conducteur (14) couplé magnétiquement à l'élément magnétique (13) et
fixé au boîtier (10) de telle façon que l'énergie cinétique vibrationnelle générée par la source externe détermine un déplacement relatif (x) entre l'élément magnétique (13) et le premier enroulement (14) causant une différence de potentiel à générer aux extrémités du premier enroulement (14),
**caractérisé par** :

la mise à disposition d'un deuxième enroulement conducteur (15) fixé à un support non-vibrant (16) tout en étant stationnaire par rapport audit support (16) et séparé du boîtier (10), la distance entre le premier enroulement (14) et le deuxième enroulement (15) étant choisie de manière à rendre infime un couplage magnétique mutuel entre lesdits premier et deuxième enroulements (14, 15) ; et
la connexion d'un moyen de commande (17) aux extrémités du deuxième enroulement (15), pour l'injection d'un courant électrique dans le deuxième enroulement (15) et la régulation de l'intensité dudit courant électrique de manière à adapter la fréquence de résonance du générateur électromagnétique (11) à la fréquence ou aux fréquences associées à l'énergie cinétique vibrationnelle générée par la source externe.

10. Procédé selon la revendication 9, comprenant en outre l'émulation d'un système masse-ressort-amortisseur en conséquence de l'introduction d'un courant électrique dans le deuxième enroulement (15) par connexion du moyen de commande (17) aux extrémités du deuxième enroulement (15) .

Fig. 1

$R_{c\_int}$

$L_{c\_int}$

$L_L$

$R_L$

$C_L$

$i(t)$

$+$

$\varepsilon(t)$

$-$

$\dfrac{m}{\theta_{int}}\ddot{x}(t)$

$\dfrac{m}{\theta_{int}^2}$

$\dfrac{k_s}{\theta_{int}}x(t)$

$\dfrac{\theta_{int}^2}{k_s}$

$\dfrac{c}{\theta_{int}}\dot{x}(t)$

$\dfrac{\theta_{int}^2}{c}$

$\dfrac{m}{\theta_{int}}\ddot{y}(t)$

(b)

$P_{ORIGINAL\_MAX}$

$-P_{ORIGINAL}$

$f_{opt}$

(c)

Fig. 2

z

$x(t)$

$y(t)$

$k_s \cdot x(t)$

$c \cdot \dot{x}(t)$

m

$\theta_{int} \cdot i(t)$

(a)

20

Fig. 3

Fig. 4

EP 3 766 165 B1

Fig. 5

Fig. 6

**(a)**

**(b)**

Fig. 7 (1/2)

(c)

(d)

Fig. 7 (2/2)

Fig. 8

Fig. 9

Fig. 10

Fig. 11

**EP 3 766 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010194117 A1